(19) Europäisches Patentamt
European Patent Office
Office européen des brevets

(11) **EP 2 079 155 A1**

(12) **EUROPEAN PATENT APPLICATION**

(43) Date of publication:
**15.07.2009 Bulletin 2009/29**

(51) Int Cl.:
***H02K 53/00*** (2006.01)

(21) Application number: **08425010.9**

(22) Date of filing: **09.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nevi, Ugo**
**00182 Roma (IT)**

(72) Inventor: **Nevi, Ugo**
**00182 Roma (IT)**

(74) Representative: **Conforti Cioncoloni, Marisa**
**c/o Studio Consulenza Brevetti**
**21, Viale Castrense**
**00182 Rome (IT)**

(54) **Machine transforming magnetic energy in electric energy**

(57)    A machine (100) transforming magnetic energy in electric energy, comprising:

- at least one trolley (101), free to run along a constrained path on a guiding system (104);
- at least one system of outside magnets (102, 103), placed dose to or in proximity of said guiding system (104);
- at least one system of inside magnets (105, 106), carried on said trolley (101), able to interact with said system of outside magnets (102, 103) and therefore to transform magnetic energy in kinetic energy of the same trolley (101);
- means for orientation and control of said outside (102, 103) and inside magnets (105, 106);
- at least one dynamo, comprising a train of gears activated by motion of said trolley (101), able to generate electric energy;
- means for transmission of electric energy towards one or more external users (load) or towards energy accumulation devices (battery),

so that said systems of magnets, outside (102, 103) and inside (105, 106), interact each other, and lead the motion of said trolley (101) along said guiding system (104), and gears of said dynamo are simultaneously activated, generating in this way the electric energy that can be stored in said energy accumulation devices.

Fig. 1

Printed by Jouve, 75001 PARIS (FR)

**Description**

TECHNICAL FIELD

The present invention concerns a machine able to generate electric power using the energy stored in permanent magnets.

More exactly, the present invention uses the conventional dynamo in order to generate electric power. These dynamo are placed on a running trolley, so that the same motion leads the rotation of the dynamo gears. The motion of said trolley is caused by interaction forces existing between inside magnets, also placed on trolley, and outside magnets, placed along the guided path of the same trolley.

BACKGROUND ART

As known, a dynamo is a rotating electric machine suitable for transformation of mechanical energy in electric energy. In basic embodiments it consists of a conducting circuit, placed within a magnetic field that is generated, in example, by a pair of permanent magnets, put in rotation by an external shaft. According to the *Faraday* induction law, a conductor moving in a magnetic field causes an inducted electric force so that, providing a short circuit on electric load, it is possible the transformation of mechanical energy in electric energy.

Actually, machines for generation of electric power use forces of the nature in order to keep gears in motion. In elementary case of the bicycle's dynamo, it is the pedaling cyclist that gives the necessary energy making the dynamo to work properly. In a more complex case, instead, of modern hydroelectric power plants, the mechanical energy is given by huge quantity of water flowing along specific pipelines and causing the rotation of big turbines, generating in such a way a high quantity of electric energy.

DISCLOSURE OF INVENTION

The basic idea of the present invention is to use the interaction forces of magnets in order to give the necessary energy in order to keep in rotation the gears of the above dynamo. In such a way, it is obtained a system able to generate electric energy, continuously and efficiently, having a certain number of advantages in respect of the systems known in the state of art.

In fact, machines built on the basis of these new introduced concepts are compatible with environment, according to the property of magnets that are made of not-polluting and not-leaking materials. Then, the technical structure of these machines allow to place them in the underground spaces, preserving from acoustic and visual pollution that is a typical problem of big power plants.

Furthermore, the modularity and scalability of these machines allow to customize applications according to different landscapes and different local demand of low cost energy.

Therefore, the main objective of the present invention is to provide a machine able to transform magnetic energy in electric energy, so that the same electric energy can be directly available to a final user or stored in proper energy accumulation devices.

Another objective of the present invention is to introduce a machine where said transformation of energy can happen in any environmental situation, providing orientation and calibration of parts according to different values of angles between magnets.

A further objective is to have modular and scalable parts so that the machine can be used according to different topologies and different levels of complexity, going from the typical dimensions of scale models, to the dimensions of big power plants.

Another further objective is to propose a machine that can be realized on a large industrial scale, having standard and well available components, characterized in a sustainable production either from economical and from environmental point of view.

Therefore, it is specific subject of the present invention a machine transforming magnetic energy in electric energy, comprising:

- at least one trolley, free to run along a constrained path on a guiding system;
- at least one system of outside magnets, placed close to or in proximity of said guiding system;
- at least one system of inside magnets, carried on said trolley, able to interact with said system of outside magnets and therefore to transform magnetic energy in kinetic energy of the same trolley;
- means for orientation and control of said outside and inside magnets;
- at least one dynamo, comprising a train of gears activated by motion of said trolley, able to generate electric energy;
- means for transmission of electric energy towards one or more external users (load) or towards energy accumulation devices (battery),
so that said systems of magnets, outside and inside, interact each other, and lead the motion of said trolley along said guiding system, and gears of said dynamo are simultaneously activated, generating in this way the electric energy that can be stored in said energy accumulation devices.

BRIEF DESCRIPTION OF DRAWINGS

The present invention will now be described for illustrative but not limitative purposes, according to its preferred embodiments, with particular reference to the figures of the enclosed drawings, wherein:

figure 1 is a perspective top view of a machine transforming magnetic energy in electric energy, where the main part is a trolley running along a railway system, and comprising a system of inside magnets interacting with a system of outside magnets;
figure 2 is a sectioned lateral view of a trolley belonging to the same machine of figure 1, transforming magnetic energy in electric energy, where a particular consisting of a dynamo is highlighted;
figure 3 if a front view of the same trolley of figure 2;
figure 4 is a front view of the same trolley of figure 2, where the single outside and inside parts, leading the magnetic interaction of the machine, are highlighted;
figure 5 is a schematic global view of a system transforming magnetic energy in electric energy, in particular including said trolley, with system of outside and inside magnets, and dynamo for generation of electric power.

BEST MODES FOR CARRYING OUT THE INVENTION

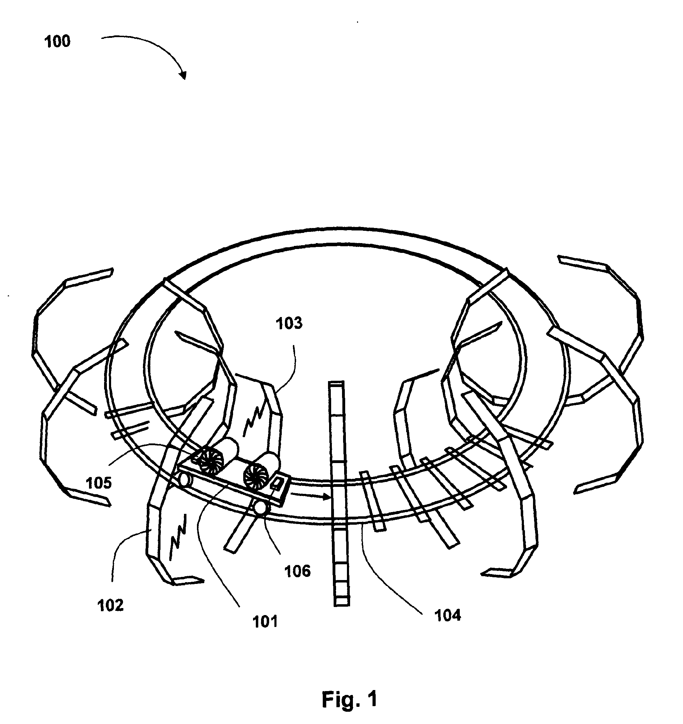

It is herein underlined that, in the following, only some of the many conceivable embodiments of the present invention will be described, and they are just particular examples that do not introduce any limitations, having the possibility to describe many other embodiments based on the disclosed technical solution of the present invention.
The main parts of machine 100, for transformation of magnetic energy in electric energy, are illustrated in figure 1, and they are, in particular, a trolley 101, carrying a system of inside magnets 105 and 106, and a system of outside magnets 102 and 103 placed in proximity of a railway system 104 where said trolley 101 is constrained and free to run.
The basic principle of this invention is that the magnetic interaction, between the system of inside magnets 105 and 106 and the system of outside magnets 102 and 103, generates a repulsive force that causes the consequent motion of trolley 101.
This motion is able to keep a rotation of dynamo gears and therefore to generate electric energy.
In the case of figure 1, it has been chosen a specific example of magnets' configuration, like that illustrated, and a specific ring closed path.
A first remark is that machine 100 should be able to generate energy continuously and independently on different alignments of outside and inside magnets. In fact, there are different angles of magnets with reference to each respective position of trolley along the path, with a consequent different interaction force, that depends mainly on distance and angle between magnets.
In the ideal situation, when outside and inside magnets are constantly aligned on a 45 degrees angle, in respect of the motion direction of trolley 101, the resulting interaction force would be sufficient to keep the machine always working. Indeed, the optimal angle between magnets depends on other physical parameters, like in example the speed of the same trolley 101. In fact, it is clear that high speed means short time for interactions, and consequently angles between magnets that are smaller than 45 degrees, instead low speed means long time for interactions, and consequently angles between magnets that are approximately 45 degrees.
In order to keep the ideal alignment of magnets, all along the path, some orientation devices are introduced in the machine, so that the angle between inside magnets, 105 and 106, and outside magnets, 102 and 103, is adjusted continuously according to position and velocity of trolley 101.
These orientation devices are controlled in real time by an automatic system, that consists of a microprocessor machine, that receives a set of data as an input, concerning position and velocity of trolley 101, and gives a set of data as an output, related to position and angle of inside magnets, 105 and 106, and outside magnets, 102 and 103.
The automatic driving of trolley 101, put in motion by magnetic interactions, in any situation and spatial configuration of magnets, is a problem that can be solved using modern feedback control systems, with synthesis based on eigenvalues, proportional-integral-derivative controller (PID), optimal control based on calculus of variations, or robust control in H-infinite.

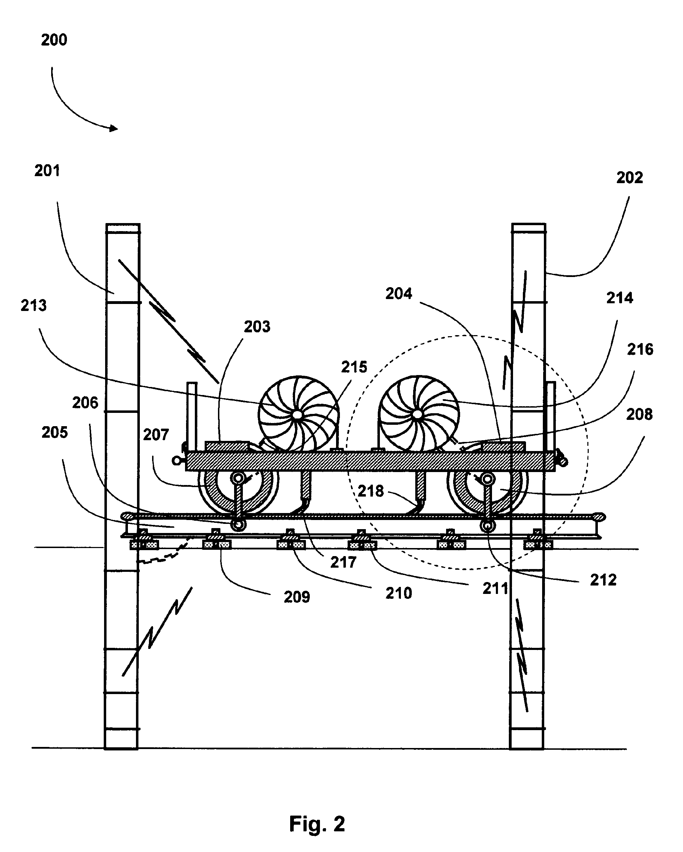

In figure 2 it is illustrated more in detail trolley 200, that carries the inside magnets of the present invention, 203 and 204, said magnets interacting with outside magnets, 201 and 202. The same trolley 200 runs along railway 205 that is kept stable on ground by a set of ties with respective bolts 209, 210 and 211. In this case, the lateral wheels 207 and 208 of trolley 200 include some additional small wheels, 206 and 212, that run in the lower part of railway 205 in order to avoid derailment.

The translatory motion of trolley 200 along the railway 205 causes the rotation of gears belonging to dynamo 213 and 214, activated through transmission belts 215 e 216 connected to wheels 207 and 208. A pair of brush contacts, 217 and 218, connect electrically dynamo, 213 and 214, to conductors placed along the railway, so that the produced electric energy can be immediately transmitted towards external user devices, so-called load, or towards energy accumulation devices like, in example, rechargeable batteries.

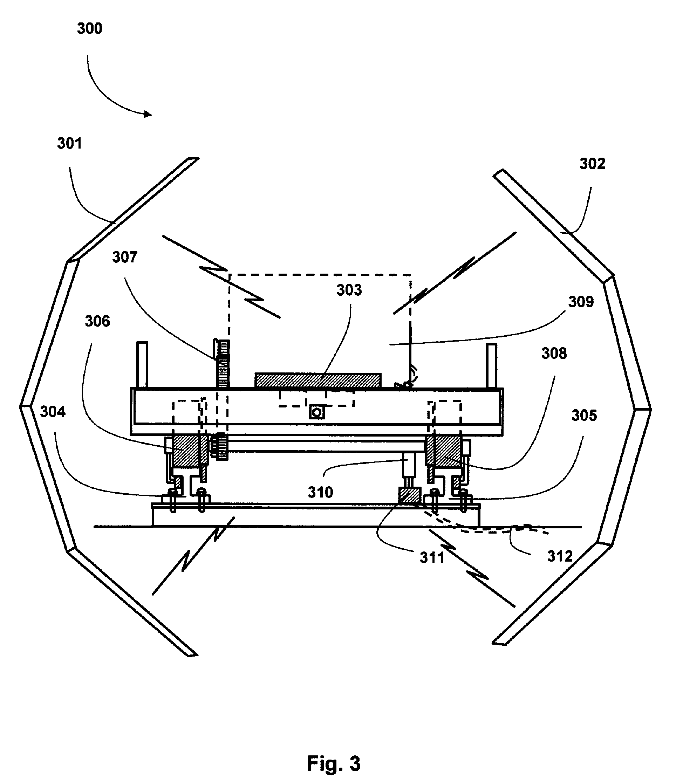

In the front view of figure 3, the typical parts of the same trolley of figure 2 are better highlighted. In particular, trolley 300 stands with wheels 306 and 308 on rails 304 and 305. The transmission belt 307, during motion of trolley 300, keeps in rotation the dynamo gears 309. The same dynamo 309 is electrically connected, through a brush contact element 310, to a conductor 311 that is placed along the railway. In this way, as already introduced, it has been realized the transmission of energy to the outside world.

In the front view of figure 3, among the two magnets carried on trolley 300, only magnet 303 is visible. It is clear that the same magnet 303, properly oriented, is able to interact with the outside magnets, 301 and 302, that are properly oriented too, in order to lead the translatory motion of trolley 300 along rails 304 and 305.

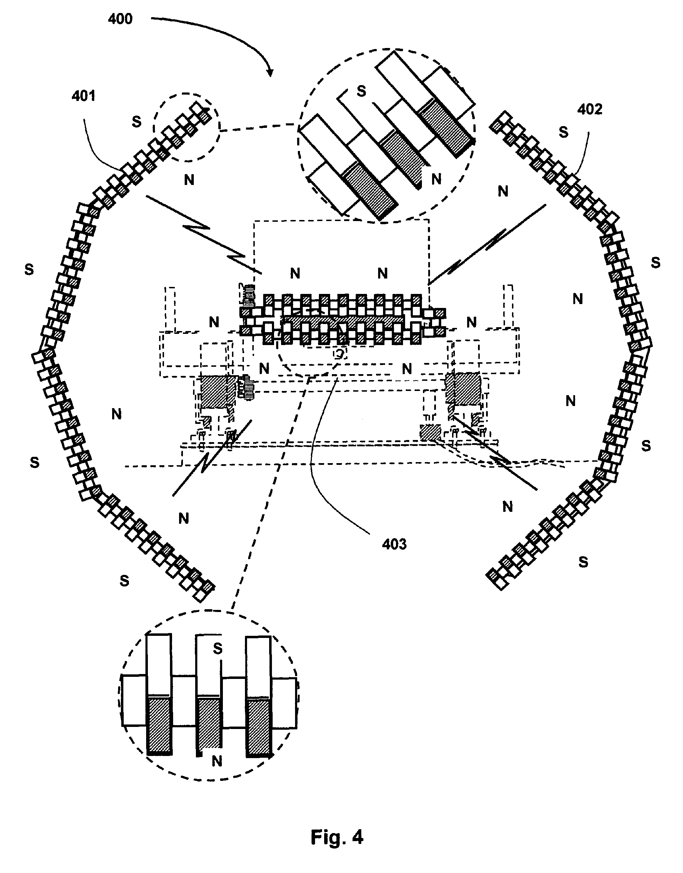

In figure 4 it is better shown the configuration of dipole magnets that are the basic parts leading the interaction between trolley 403 and the external structures 401 and 402. Each single dipole is placed on said external structures 401 and 402 with the north pole "N" in direction of trolley 403, and the south pole "S" in the opposite direction. Instead, on trolley 403 each single dipole is placed with the north pole "N" in direction of external structures 401 and 402, and the south pole "S" in the opposite direction. In this way, either the magnets placed on trolley and the outside magnets will always show, each other, faces of identical poles, and therefore they will always generate a magnetic repulsive force, that is the source keeping the trolley constantly in motion.

The previously described orientation devices, able to drive the optimal angle, between inside and outside magnets, are placed in each respective magnetic dipole represented in figure 4.

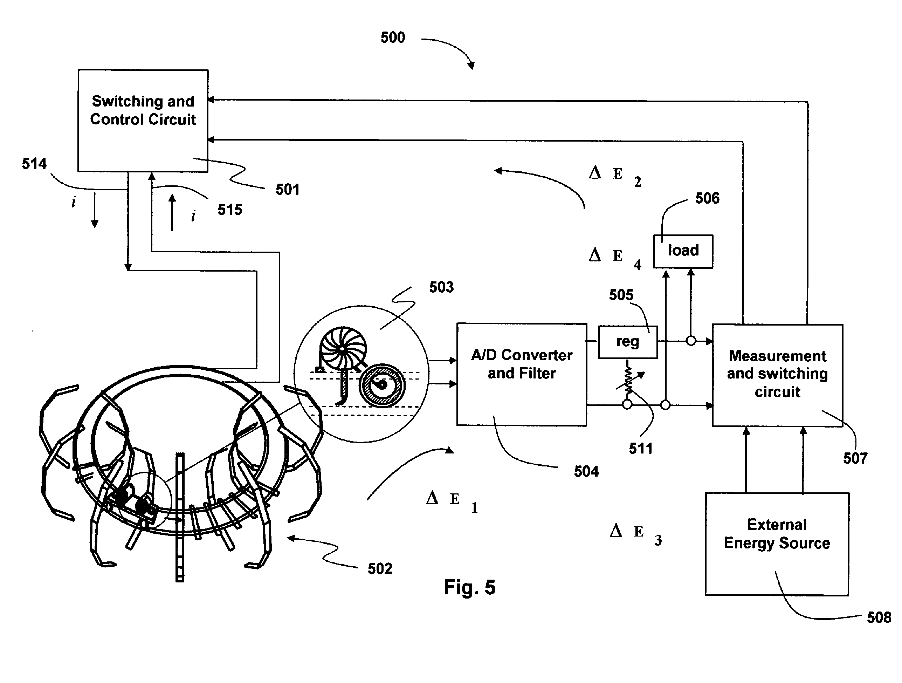

In figure 5 it is illustrated a schematic view that better explains the energy balance of the machine 500 for transformation of magnetic energy in electric energy.

When the system is working at full stretch, the trolley with magnets 502, running along the railway on the effect of magnetic interaction, keeps the dynamo gears 503 in motion, generating the electric energy ($\Delta E_1$). This energy can be made available immediately to an external user 506 (*load*), or can be stored in proper energy accumulation devices ($\Delta E_4$).

In any case, part of the generated energy ($\Delta E_2$) is available again as a feedback to system 501 in order to optimize the global efficiency of the machine.

When it is necessary, for any reason, a *start-up* current, an external source of energy 508 is on-line connected in order to supply energy ($\Delta E_3$). This situation is useful especially when the intensity of magnetic forces is not sufficient to "start" the machine. Therefore, from an energetic point of view, the conservation of energy law states the following equation:

$$\Delta E_1 + \Delta E_3 = \Delta E_2 + \Delta E_4 + \Delta E_{diss.} \qquad (1)$$

that is, the quantity of energy $\Delta E_1$, produced by motion of trolley with magnets 502, through dynamo 503, in addition to the quantity of external energy $\Delta E_3$, must be equal to the quantity of energy $\Delta E_2$, absorbed by the same device 502, in addition to the quantity of energy $\Delta E_4$, absorbed by a user 506 (*load*), in addition again to the energy $\Delta E_{diss.}$, dissipated by friction, *Joule* effect, etc.

The present invention includes additional embodiments corresponding to variations on its general structure and to variations on shape of its parts.

In example, although in the above description a single trolley with magnets has been illustrated, it is possible to link a series of identical trolleys in order to build a train, or convoy, comprising generators of electric power, and therefore to multiply the quantity of produced energy.

Furthermore, in the illustrated case a system with permanent magnets has been described, but this does not exclude the possibility to use, in example, magnets that are power supplied by external energy (electromagnets).

Then, the railway system can define a running path that is particularly various and articulated, following in example the morphology and roughness of landscapes, going from a simple case, like a closed ring path, to a complex situation like a nationwide railway system. This railway system can be placed directly on ground surface or in special protected sites, like in example the underground or depth of seas and oceans.

Again, the scale factor of the machine, subject of the present invention, can range from typical dimensions of toy models, useful in example to supply small remote devices, to dimensions of big industrial plants, that can represent big electric power plants able to guarantee the basic energy needs of cities and villages. These plants can be placed on remote mountains, in large desert surfaces or under the ground of cities, in sites that are protected and not accessible to people.

Another important aspect, marginal to the above described technical solutions, but particularly significant in the realization of this invention on a large industrial scale, is that, when the external machine's surfaces are visible to the large public, they constitute an ideal vehicle for publicity messages.

For this reason, beyond the basic function of transforming magnetic energy in electric energy, the present machine can realize a useful instrument suitable to show publicity messages addressed to the large public.

Therefore, all of the above examples show that the present invention achieves the proposed objectives. In particular, it permits to realize a machine able to transform magnetic energy in electric energy, so that the same electric energy is directly available to a final user or stored in proper energy accumulation devices.

Then, it permits to realize a machine where said transformation of energy happens in any environmental situation, providing orientation and calibration of parts according to different values of angles between magnets.

Furthermore, the present invention has modular and scalable parts so that the machine can be used according to different topologies and different levels of complexity, going from the typical dimensions of scale models, to the dimensions of big power plants.

Finally, the present proposed machine can be realized on a large industrial scale, having standard and well available components, characterized in a sustainable production either from economical and from environmental point of view.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. A machine (100) transforming magnetic energy in electric energy, **characterized in** comprising:

   - at least one trolley (101), free to run along a constrained path on a guiding system (104);
   - at least one system of outside magnets (102, 103), placed dose to or in proximity of said guiding system (104);
   - at least one system of inside magnets (105, 106), carried on said trolley (101), able to interact with said system of outside magnets (102, 103) and therefore to transform magnetic energy in kinetic energy of the same trolley (101);
   - means for orientation and control of said outside (102, 103) and inside magnets (105, 106);
   - at least one dynamo, comprising a train of gears activated by motion of said trolley (101), able to generate electric energy;
   - means for transmission of electric energy towards one or more external users (load) or towards energy accumulation devices (battery),

   so that said systems of magnets, outside (102, 103) and inside (105, 106), interact each other, and lead the motion of said trolley (101) along said guiding system (104), and gears of said dynamo are simultaneously activated, generating in this way the electric energy that can be stored in said energy accumulation devices.

2. A machine (100) transforming magnetic energy in electric energy, according to previous claim 1, **characterized in that** said means for orientation and control comprise:

   - a system of sensors and/or detectors of physical parameters like intensity and direction of magnetic interaction force, position and orientation of said systems of outside (102, 103) and inside (105, 106) magnets;
   - a microprocessor machine that: receives a set of data as an input from said system of sensors and/or detectors of physical parameters; computes said data according to a specific control algorithm; gives a set of data as an output, related to optimal position and angle of inside magnets (105, 106) and outside magnets (102, 103);
   - a system of actuators and/or microcontrollers that uses said data of optimal position and angle of inside magnets (105, 106) and outside magnets (102, 103), and directly leads specific orientation devices,

   so that said trolley (101) is kept, under the effect of magnetic interaction, in constant motion along said guiding system (104).

3. A machine (100) transforming magnetic energy in electric energy, according to previous claim 2, **characterized in that** said specific control algorithm is one of the following:

- synthesis based on eigenvalues;
- proportional-integral-derivative controller (PID);
- optimal control based on calculus of variations;
- robust control in H-infinite.

4. A machine (100) transforming magnetic energy in electric energy, according to one or more of previous claims, **characterized in that:**

- said dynamo (213, 214) are carried on said trolley (200) and a train of gears of said dynamo (213, 214) is activated through transmission belts (215, 216) connected to wheels (207, 208) of the same trolley (200), so that the translatory motion of trolley (200) automatically generates, through said dynamo (213, 214), electric energy.

5. A machine (100) transforming magnetic energy in electric energy, according to one or more of previous claims, **characterized in** further comprising:

- brush contacts (217, 218) that connect electrically said dynamo (213, 214) to conductors placed along the railway, so that the produced electric energy can be immediately transmitted towards external user devices, so-called load, or towards energy accumulation devices like, in example, rechargeable batteries.

6. A machine (100) transforming magnetic energy in electric energy, according to one or more of previous claims, **characterized in** comprising, dose to lateral wheels (207, 208) of trolley (200), some additional small wheels (206, 212) that run in the lower part of railway (205) in order to avoid derailment.

7. A machine (100) transforming magnetic energy in electric energy, according to one or more of previous claims, **characterized in that:**

- said trolley (101) is linked to a series of identical trolleys (101), in order to build a train, or convoy, of electric power generators;
- said systems of outside (102, 103) and inside (105, 106) magnets is made of respective magnets that are power supplied by external energy (electromagnets);
- said guiding system (104) defines a running path that is particularly various and articulated, following in example the morphology and roughness of landscapes;
- the scale factor of machine (100) can range from typical dimensions of toy models to dimensions of big industrial plants, so that it is possible to cover different uses, from supply of small remote devices to energy needs of cities and villages.

8. A machine (100) transforming magnetic energy in electric energy, according to one or more of previous claims, **characterized in that:**

- on the external visible surface of said system of magnets (201, 202, 301, 302), or in any other visible part of said machine (100), it is shown a specific message, that is a written sentence, an image, a logo or any other distinctive sign, so that said machine (100) represents a communication channel for transmission of messages, preferably publicity, to the large public.

100

103

105

106

102

101

104

**Fig. 1**

**Fig. 2**

**Fig. 3**

**Fig. 4**

Fig. 5

**European Patent Office**

## EUROPEAN SEARCH REPORT

Application Number

EP 08 42 5010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANGRIST S W: "PERPETUAL MOTION MACHINES" SCIENTIFIC AMERICAN, SCIENTIFIC AMERICAN INC., NEW YORK, NY, US, vol. 218, no. 1, 1 January 1968 (1968-01-01), pages 114-122, XP002036811 ISSN: 0036-8733 * the whole document * ----- | 1-8 | INV. H02K53/00 |
| A | REED T G ED  - INSTITUTE OF ELECTRICAL AND ELECTRONICS ENGINEERS:  "THE REED MAGNETIC MOTOR THE MOTOR OF TOMORROW" AEROSPACE POWER SYSTEMS. BOSTON, AUG. 4 - 9, 1991; [PROCEEDINGS OF THE INTERSOCIETY ENERGY CONVERSION ENGINEERING CONFERENCE], NEW YORK, IEEE, US, vol. 4, 4 August 1991 (1991-08-04), pages 484-486, XP000312849 ISBN: 978-0-89448-163-5 * the whole document * ----- | 1-8 | |
| A | BURGER W:  "SIE DURFEN NICHT FUNKTIONIEREN, ABER WARUM?" TECHNISCHE RUNDSCHAU, EDITION COLIBRI AG., WABERN, CH, vol. 82, no. 19, 11 May 1990 (1990-05-11), pages 92-97, XP000127977 ISSN: 1023-0823 * the whole document * ----- | 1-8 | **TECHNICAL FIELDS SEARCHED (IPC)** H02K |

The present search report has been drawn up for all claims

| Place of search | Date of completion of the search | Examiner |
|---|---|---|
| Munich | 3 June 2008 | Kampka, Achim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................
& : member of the same patent family, corresponding
    document

EPO FORM 1503 03.82 (P04C01)